# EUROPEAN PATENT SPECIFICATION

(11) **EP 4 704 332 B1**
(45) Date of publication and mention of the grant of the patent: **09.12.2026**
(21) Application number: 24796823.3
(22) Date of filing: 11.04.2024
(51) Int. Cl.: H02P 21/13, H02P 21/18, H02P 21/24, H02P 21/14, H02P 21/22, H02P 6/18

(54) **MOTOR CONTROL DEVICE**
MOTORSTEUERUNGSVORRICHTUNG
DISPOSITIF DE COMMANDE DE MOTEUR

(30) Priority: 27.04.2023 JP 2023073162
(43) Date of publication of application: 04.03.2026
(73) Proprietor: Specified Business Preparation Co., Ltd., Osaka 571-8506 (JP)
(72) Inventor: SATO, Daisuke, Osaka 571-0057 (JP)
(74) Representative: SSM Sandmair
(86) International application number: PCT/JP2024/014736
(87) International publication number: WO 2024/225067

(56) References cited:
- WO-A1-2005/006534
- JP-A- 2016 201 872
- US-A1- 2008 079 385
- US-A1- 2014 333 241
- US-A1- 2021 211 079

## Description

### TECHNICAL FIELD

The present disclosure relates to a motor control device that controls a motor.

### BACKGROUND ART

Heretofore, a motor control device that controls a motor by controlling a three-phase AC voltage to be supplied to the motor has been known.

For example, PTL 1, PTL 2, and PTL 3 disclose a motor control device adopting a method of calculating a current flowing through each phase of a three-phase AC on the basis of a current flowing between an inverter circuit, which outputs a three-phase AC voltage to a motor by switching a power supply voltage of a DC power supply, and the DC power supply (such a current is hereinafter also referred to as a "DC bus current"), and controlling the switching timing in the inverter circuit on the basis of the calculated current of each phase (such a method is hereinafter also referred to as a "one-shunt current detection method").

However, in the motor control device adopting the one-shunt current detection method, the current flowing through each phase of the three-phase AC may not be able to be uniquely specified in a period in which the three-phase AC voltage is within a predetermined phase range (such a period is hereinafter also referred to as a "specific phase period").

The specific phase period corresponds to, for example, a period in which, in the switching performed by the inverter circuit, a difference between the switching timing of one phase of the three-phase AC and the switching timing of the other phase is shorter than a detection period necessary for the current sensor that detects the DC bus current to detect the current.

### Citation List

### Patent Literature

PTL 1: Unexamined Japanese Patent Publication No. 2007-312511
PTL 2: Unexamined Japanese Patent Publication No. 2008-086139
PTL 3: Unexamined Japanese Patent Publication No. 2009-055748

US 2008 079385 A1 discloses a motor control device and the features of the preamble of independent claim 1. Further examples of motor control devices are disclosed in US 2014 333241 A1 and US 2021 211079 A1.

### SUMMARY OF THE INVENTION

To deal with this, the present disclosure aims to provide a motor control device adopting a one-shunt current detection method and capable of controlling a motor even when a specific phase period exists.

A motor control device according to an aspect of the present disclosure is a motor control device including: an inverter circuit that outputs a three-phase AC voltage to a motor by switching a power supply voltage of a DC power supply; a current calculator that calculates a d-axis current flowing through a d-axis of the motor and a q-axis current flowing through a q-axis of the motor based on a current flowing between the DC power supply and the inverter circuit; a rotation speed estimation unit that calculates an estimated rotation speed of the motor based on the d-axis current and the q-axis current; a target rotation speed calculator that calculates a target rotation speed of the motor based on an operation command of the motor; and a voltage command calculator that calculates a duty command for controlling the switching performed by the inverter circuit based on a difference between the target rotation speed and the estimated rotation speed, in which the rotation speed estimation unit includes: an induced voltage calculator that calculates an induced voltage residual angle indicating an angle with respect to the q-axis of a vector, in which a d-axis estimated induced voltage residual indicating a residual of an induced voltage induced in the d-axis of the motor is a d-axis component and a q-axis estimated induced voltage residual indicating a residual of an induced voltage induced in the q-axis of the motor is a q-axis component, based on the d-axis current and the q-axis current; a first switching unit that switches a value between zero and the induced voltage residual angle and outputs the value in each of a first period in which the three-phase AC voltage is within a predetermined phase range and a second period other than the first period; and a first proportional integral computing unit that performs proportional integral computation using a signal output from the first switching unit as an input signal and calculates the estimated rotation speed.

According to a motor control device of one aspect of the present disclosure, there is provided a motor control device that adopts a one-shunt current detection method and can control a motor even when a specific phase period exists.

### BRIEF DESCRIPTION OF THE DRAWINGS

Fig. 1 is a block diagram illustrating a configuration of a motor control system according to an exemplary embodiment.
Fig. 2 is a schematic diagram illustrating a typical voltage waveform of a three-phase AC voltage output from an inverter circuit according to the exemplary embodiment.
Fig. 3 is a schematic diagram illustrating a relationship between an energization pattern of each switching element and a DC bus current according to the exemplary embodiment.
Fig. 4 is a schematic diagram illustrating an example of a state in which a current sensor cannot correctly detect a DC bus current when a conduction pattern switching period is shorter than a detection period of the current sensor.
Fig. 5 is a block diagram illustrating a configuration of a rotation speed estimation unit according to the exemplary embodiment.

### DESCRIPTION OF EMBODIMENT

### (Background of one aspect of the present disclosure)

Heretofore, in a motor control device adopting a one-shunt current detection method, the following two control methods have been known as control methods for controlling a motor in a case where a specific phase period may exist.

As a first control method, for example, PTL 1 discloses a control method in which a current value of each phase in a specific phase period is calculated based on a DC bus current detected immediately before the specific phase period.

However, in this first control method, the amount of calculation needed when the current value of each phase in the specific phase period is calculated based on the DC bus current detected immediately before the specific phase period increases. Therefore, even in the case of trying to implement the first control method using an inexpensive microcomputer with low processing capability, the first control method cannot be implemented due to insufficient processing capability of the microcomputer. As described above, in order to implement the first control method, there is a problem that the first control method cannot be implemented unless an expensive microcomputer with high processing capability is used. Even when this first control method is implemented by using an expensive microcomputer with high processing capability, there is a problem that power consumption increases in order to perform large calculation.

As a second control method, for example, PTL 2 discloses a control method in which a voltage waveform of each phase of a three-phase AC voltage supplied to a motor is intentionally distorted from an ideal sine wave so that a specific phase period does not occur.

However, in this second control method, the voltage waveform of each phase of the three-phase AC voltage supplied to the motor is distorted from the ideal sine wave. Therefore, there is a problem that the rotation sound of the rotating motor increases.

Therefore, the inventors have intensively repeated experiments and studies in order to implement a motor control method, which is a control method for the motor control device adopting the one-shunt current detection method to control the motor in a case where the specific phase period may exist, that can be implemented using an inexpensive microcomputer with low processing capability and does not intentionally distort the voltage waveform of each phase of the three-phase AC voltage supplied to the motor from an ideal sine wave.

At this time, the inventors have repeated experiments and studies particularly focusing on the fact that, in a motor that rotates at a constant speed for a long period of time and that accelerates and decelerates slowly (such a motor is hereinafter also referred to as a "specific type motor" including, for example, a blower fan motor or the like that drives a blower fan for cooling an in-vehicle battery), an induced voltage residual angle indicating an angle with respect to a q-axis of a vector having a d-axis estimated induced voltage residual, indicating a residual of an induced voltage induced in a d-axis of the motor, as a d-axis component and a q-axis estimated induced voltage residual, indicating a residual of an induced voltage induced in a q-axis of the motor, as a q-axis component constantly transitions among values near zero.

As a result, the inventors have found that, in the motor control device adopting the one-shunt current detection method, when a motor to be controlled is the specific type motor, (1) a practical problem does not occur in control over the specific type motor and (2) the amount of calculation in the calculation of the current value of each phase in the specific phase period does not increase with respect to the amount of calculation in other periods even when the current value of each phase in the specific phase period is calculated while the induced voltage residual angle is replaced with a fixed value of zero in the specific phase period.

Based on these findings, the inventors have further repeated experiments and studies to arrive at a motor control device according to the present disclosure to be described below.

A motor control device according to an aspect of the present disclosure is a motor control device including: an inverter circuit that outputs a three-phase AC voltage to a motor by switching a power supply voltage of a DC power supply; a current calculator that calculates a d-axis current flowing through a d-axis of the motor and a q-axis current flowing through a q-axis of the motor based on a current flowing between the DC power supply and the inverter circuit; a rotation speed estimation unit that calculates an estimated rotation speed of the motor based on the d-axis current and the q-axis current; a target rotation speed calculator that calculates a target rotation speed of the motor based on an operation command of the motor; and a voltage command calculator that calculates a duty command for controlling the switching performed by the inverter circuit based on a difference between the target rotation speed and the estimated rotation speed, in which the rotation speed estimation unit includes: an induced voltage calculator that calculates an induced voltage residual angle indicating an angle with respect to the q-axis of a vector, in which a d-axis estimated induced voltage residual indicating a residual of an induced voltage induced in the d-axis of the motor is a d-axis component and a q-axis estimated induced voltage residual indicating a residual of an induced voltage induced in the q-axis of the motor is a q-axis component, based on the d-axis current and the q-axis current; a first switching unit that switches a value between zero and the induced voltage residual angle and outputs the value in each of a first period in which the three-phase AC voltage is within a predetermined phase range and a second period other than the first period; and a first proportional integral computing unit that performs proportional integral computation using a signal output from the first switching unit as an input signal and calculates the estimated rotation speed.

In the first period, the motor control device calculates the duty command (also referred to as a Pulse Width Modulation (PWM) command) for controlling switching of an inverter without using a DC bus current which is a current flowing between the DC power supply and the inverter circuit.

Therefore, according to the motor control device, by setting the first period as the specific phase period, the duty command for controlling the switching of the inverter can be calculated even in the specific phase period.

The motor control device is a motor control device adopting a one-shunt current detection method.

Thus, according to the motor control device described above, there is provided a motor control device that adopts a one-shunt current detection method and can control a motor even when a specific phase period exists.

According to the motor control device described above, there is provided a motor control device that can be implemented using an inexpensive microcomputer with low processing capability and does not intentionally distort the voltage waveform of each phase of the three-phase AC voltage supplied to the motor from an ideal sine wave.

Meanwhile, the induced voltage calculator may include: a d-axis induced voltage residual calculator that calculates the d-axis estimated induced voltage residual based on the d-axis current and the q-axis current; a q-axis induced voltage residual calculator that calculates the q-axis estimated induced voltage residual based on the d-axis current and the q-axis current; and an induced voltage residual angle calculator that calculates the induced voltage residual angle based on the d-axis estimated induced voltage residual and the q-axis estimated induced voltage residual, the d-axis induced voltage residual calculator may include: a second switching unit that switches a value between zero and a d-axis estimated current residual, indicating a residual of the d-axis current, and outputs the value in each of the first period and the second period; and a second proportional integral computing unit that performs proportional integral computation using a signal output from the second switching unit as an input signal and calculates the d-axis estimated induced voltage residual, and the q-axis induced voltage residual calculator may include: a third switching unit that switches a value between zero and a q-axis estimated current residual, indicating a residual of the q-axis current, and outputs the value in each of the first period and the second period; and a third proportional integral computing unit that performs proportional integral computation using a signal output from the third switching unit as an input signal and calculates the q-axis estimated induced voltage residual.

The predetermined phase may be a phase in which a voltage difference between any two phases of the three-phase AC voltage is less than or equal to a predetermined value.

Hereinafter, a specific example of a motor control device according to an aspect of the present disclosure will be described with reference to the drawings. An exemplary embodiment described herein is a specific example of the present disclosure. Therefore, numerical values, shapes, constituent elements, arrangement and connection modes of the constituent elements, steps (steps) and the order of the steps, and the like shown in the following exemplary embodiment are merely examples, and are not intended to limit the present disclosure. Each of the drawings is a schematic view and is not necessarily exactly illustrated. In each drawing, substantially identical components are denoted by identical reference signs, and repetitive explanations thereof will be omitted or simplified.

### (Exemplary embodiment)

### <Configuration>

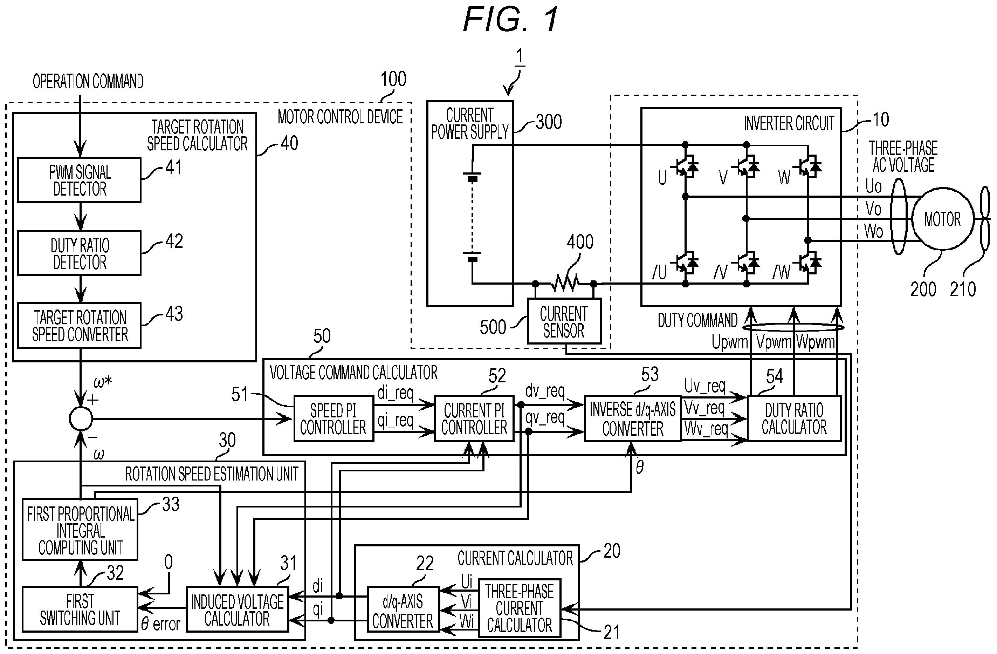

Fig. 1 is a block diagram illustrating a configuration of motor control system 1 according to the exemplary embodiment.

As illustrated in Fig. 1, motor control system 1 includes: motor control device 100; motor 200; DC power supply 300; shunt resistor 400; and current sensor 500.

Motor 200 is a three-phase AC motor. A three-phase AC voltage as a power source of motor 200 is supplied from motor control device 100.

Motor 200 is a brushless blower fan motor that drives blower fan 210 for cooling an in-vehicle battery. In other words, motor 200 is a brushless motor that rotates at a constant speed for a long period of time, and is a brushless motor that accelerates and decelerates slowly.

Motor control device 100 is configured to receive an operation command for instructing the operation of motor 200 transmitted from a host device (not illustrated), and control motor 200 so that motor 200 operates according to the received operation command. More specifically, motor control device 100 generates a three-phase AC voltage to be supplied to motor 200 so that motor 200 operates according to the operation command, and outputs the generated three-phase AC voltage to motor 200.

Motor control device 100 compares the rotation speed (hereinafter also referred to as "target rotation speed") of motor 200 indicated by the operation command with the estimated actual rotation speed (hereinafter also referred to as "estimated rotation speed") of motor 200, and performs feedback control so that the actual rotation speed matches the target rotation speed. At this time, motor control device 100 calculates the actual rotation speed based on a current flowing through each phase of the three-phase AC.

As an example to which motor control device 100 does not necessarily have to be limited, motor control device 100 operates a feedback loop in the feedback control at 16 KHz.

As an example to which motor control device 100 does not necessarily have to be limited, motor control device 100 outputs a three-phase AC voltage of 500 Hz whose frequency is sufficiently lower than 16 KHz.

DC power supply 300 is a power supply source of the three-phase AC voltage output from motor control device 100. As will be described later, in motor control device 100, inverter circuit 10 (to be described later) which is a component of motor control device 100 switches a power supply voltage of DC power supply 300 to generate a three-phase AC voltage to be output to motor 200.

Shunt resistor 400 is a resistor disposed in a current path of a DC bus current flowing between a cathode terminal of DC power supply 300 and inverter circuit 10 (to be described later).

Current sensor 500 is a sensor that detects a DC bus current flowing between DC power supply 300 and inverter circuit 10 (to be described later). More specifically, current sensor 500 detects the DC bus current by detecting a voltage across the shunt resistor.

As illustrated in Fig. 1, motor control device 100 includes: inverter circuit 10; current calculator 20; rotation speed estimation unit 30; target rotation speed calculator 40; and voltage command calculator 50.

As an example to which motor control device 100 does not necessarily have to be limited, among the components of motor control device 100, inverter circuit 10 is implemented by dedicated hardware, and current calculator 20, rotation speed estimation unit 30, target rotation speed calculator 40, and voltage command calculator 50 are implemented by a microcomputer executing a program stored in a memory.

Inverter circuit 10 generates a three-phase AC voltage including a U phase, a V phase, and a W phase by switching the power supply voltage of DC power supply 300. Inverter circuit 10 outputs the generated three-phase AC voltage to motor 200.

Inverter circuit 10 performs the switching based on a duty command output from voltage command calculator 50 (to be described later).

The duty command includes three Pulse Width Modulation signals (PWM signals) of an Upwm signal, a Vpwm signal, and a Wpwm signal. The Upwm signal is a PWM signal for controlling the conduction state of a switching element (which is hereinafter also referred to as a "U-phase switching element" and corresponds to one set of high-side and low-side transistors here) connected to wiring that supplies a U-phase voltage to motor 200. The Vpwm signal is a PWM signal for controlling the conduction state of a switching element (which is hereinafter also referred to as a "V-phase switching element" and corresponds to one set of high-side and low-side transistors here) connected to wiring that supplies a V-phase voltage to the motor. The Wpwm signal is a PWM signal for controlling the conduction state of a switching element (which is hereinafter also referred to as a "W-phase switching element" and corresponds to one set of high-side and low-side transistors here) connected to wiring that supplies a W-phase voltage to the motor.

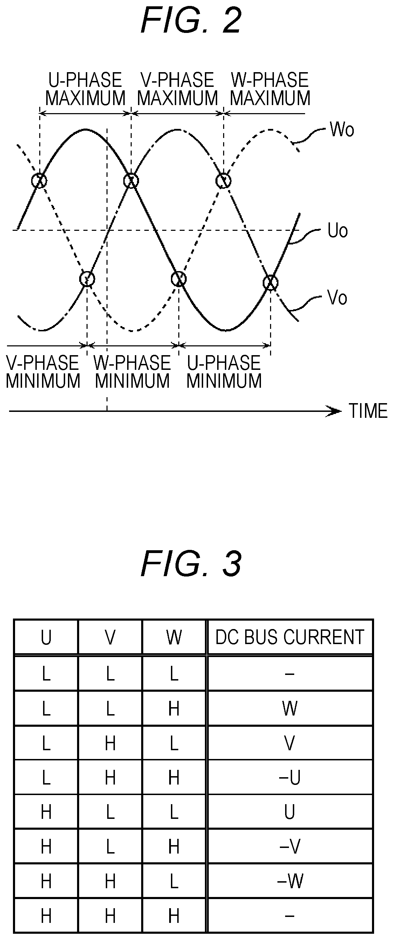

Fig. 2 is a schematic diagram illustrating a typical voltage waveform of a three-phase AC voltage output from inverter circuit 10 according to the exemplary embodiment.

As illustrated in Fig. 2, inverter circuit 10 outputs U-phase AC voltage Uo, V-phase AC voltage Vo, and W-phase AC voltage Wo, which are three sinusoidal AC voltages having phases different from each other by 120 degrees and having the same amplitude.

As illustrated in Fig. 2, in the three-phase AC voltage, a voltage level relationship among a U-phase voltage, a V-phase voltage, and a W-phase voltage changes with time. This level relationship is determined by energization patterns of the U-phase switching element, the V-phase switching element, and the W-phase switching element, which are determined by the duty command.

Fig. 3 is a schematic diagram illustrating a relationship between an energization pattern of each switching element and a DC bus current according to the exemplary embodiment.

As illustrated in Fig. 3, the conduction pattern includes eight conduction patterns of: (1) conduction pattern "LLL" in which the low-side element of the U-phase switching element is in a conduction state, the low-side element of the V-phase switching element is in a conduction state, and the low-side element of the W-phase switching element is in a conduction state; (2) conduction pattern "LLH" in which the low-side element of the U-phase switching element is in a conduction state, the low-side element of the V-phase switching element is in a conduction state, and the high-side element of the W-phase switching element is in a conduction state; (3) conduction pattern "LHL " in which the low-side element of the U-phase switching element is in a conduction state, the high-side element of the V-phase switching element is in a conduction state, and the low-side element of the W-phase switching element is in a conduction state; (4) conduction pattern "LHH" in which the low-side element of the U-phase switching element is in a conduction state, the high-side element of the V-phase switching element is in a conduction state, and the high-side element of the W-phase switching element is in a conduction state; (5) conduction pattern "HLL" in which the high-side element of the U-phase switching element is in a conduction state, the low-side element of the V-phase switching element is in a conduction state, and the low-side element of the W-phase switching element is in a conduction state; (6) conduction pattern "HLH" in which the high-side element of the U-phase switching element is in a conduction state, the low-side element of the V-phase switching element is in a conduction state, and the high-side element of the W-phase switching element is in a conduction state; (7) conduction pattern "HHL" in which the high-side element of the U-phase switching element is in a conduction state, the high-side element of the V-phase switching element is in a conduction state, and the low-side element of the W-phase switching element is in a conduction state; and (8) conduction pattern "HHH" in which the high-side element of the U-phase switching element is in a conduction state, the high-side element of the V-phase switching element is in a conduction state, and the high-side element of the W-phase switching element is in a conduction state.

As illustrated in Fig. 3, (1) the DC bus current does not flow in conduction pattern "LLL", (2) the DC bus current becomes the W-phase current flowing through the W-phase in conduction pattern "LLH", (3) the DC bus current becomes the V-phase current flowing through the V-phase in conduction pattern "LHL", (4) the DC bus current becomes a current in the opposite direction of the U-phase current flowing through the U-phase in conduction pattern "LHH", (5) the DC bus current becomes the U-phase current in conduction pattern "HLL", (6) the DC bus current becomes a current in the opposite direction of the V-phase current in conduction pattern "HLH", (7) the DC bus current becomes a current in the opposite direction of the W-phase current in conduction pattern "HHL", and (8) the DC bus current does not flow in conduction pattern "HHH".

Therefore, theoretically, the current flowing through each phase of the three-phase AC can be uniquely specified based on the DC bus current and the conduction pattern.

However, in practice, a certain detection period is required for current sensor 500 to detect the DC bus current. For this reason, in a case where a period required for switching from a certain conduction pattern to the next conduction pattern (hereinafter also referred to as a "conduction pattern switching period") is a period shorter than the detection period of current sensor 500, the DC bus current in this period cannot be correctly detected. Thus, when the conduction pattern switching period is shorter than the detection period of current sensor 500, the current flowing through each phase of the three-phase AC cannot be correctly calculated.

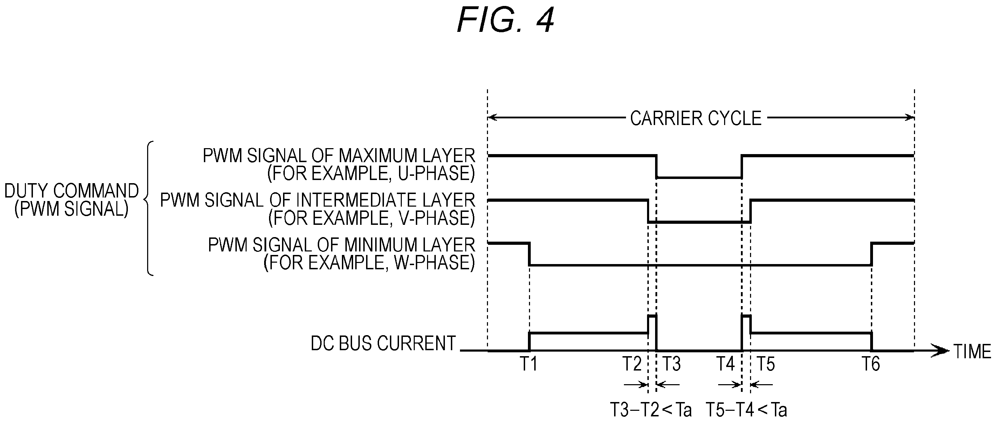

Fig. 4 is a schematic diagram illustrating an example of a state in which current sensor 500 cannot correctly detect the DC bus current when the conduction pattern switching period is shorter than the detection period of current sensor 500.

In Fig. 4, the horizontal axis represents time. The vertical axis indicates the voltage of each signal for the PWM signal, and indicates the current for the DC bus current.

As illustrated in Fig. 4, in a period in which a period from a change in voltage of one of the two PWM signals out of the three PWM signals constituting the duty command to a change of the other PWM signal is shorter than detection period Ta of current sensor 500, that is, in a period from time T2 to time T3 and a period from time T4 to time T5, the DC bus current in this period cannot be correctly detected.

The period (T3-T2, or T5-T4) in which a period from when the voltage of one of the two PWM signals out of the three PWM signals constituting the duty command changes to when the voltage of the other PWM signal changes is shorter than detection period Ta of current sensor 500 corresponds to a period in the vicinity of the timing at which the voltages of any two phases of the three-phase AC voltage intersect. That is, the period from when the voltage of one of the two PWM signals out of the three PWM signals constituting the duty command changes to when the voltage of the other PWM signal changes corresponds to the periods which are in the vicinity of the timing at which the voltages of any two phases of the three-phase AC voltage intersect and surrounded by circles in the waveform of the three-phase AC voltage output from inverter circuit 10 illustrated in Fig. 2, that is, the periods of the phase in which the voltage difference of any two phases of the three-phase AC voltage is less than or equal to a predetermined value (such a phase is hereinafter also referred to as a "predetermined phase").

Returning to Fig. 1 again, the description of motor control device 100 will be continued.

Based on the DC bus current detected by current sensor 500, current calculator 20 calculates d-axis current di flowing through the d-axis of motor 200 and q-axis current qi flowing through the q-axis of motor 200.

As illustrated in Fig. 1, current calculator 20 includes three-phase current calculator 21 and d/q-axis converter 22.

Three-phase current calculator 21 is configured to calculate U-phase current Ui, V-phase current Vi, and W-phase current Wi based on the DC bus current detected by current sensor 500.

However, as described above, the DC bus current value detected by current sensor 500 is not necessarily a correct value during a period in which the three-phase AC voltage is within a predetermined phase range (such a period is hereinafter also referred to as a "first period"). For this reason, in this first period, the values of U-phase current Ui, V-phase current Vi, and W-phase current Wi calculated by three-phase current calculator 21 are not necessarily correct values.

d/q-axis converter 22 converts U-phase current Ui, V-phase current Vi, and W-phase current Wi calculated by three-phase current calculator 21 into d-axis current di and q-axis current qi.

However, in the first period, the values of d-axis current di and q-axis current qi converted by d/q-axis converter 22 are not necessarily correct values, similarly to U-phase current Ui, V-phase current Vi, and W-phase current Wi.

Rotation speed estimation unit 30 is configured to calculate estimated rotation speed ω of motor 200 based on d-axis current di and q-axis current qi calculated by current calculator 20, and d-axis application voltage command dv_req (to be described later) applied to the d-axis of motor 200 and q-axis application voltage command qv_req (to be described later) applied to the q-axis of motor 200, which are calculated by voltage command calculator 50 (to be described later).

As illustrated in Fig. 1, rotation speed estimation unit 30 includes: induced voltage calculator 31; first switching unit 32; and first proportional integral computing unit 33.

Induced voltage calculator 31 is configured to calculate induced voltage residual angle θerror indicating an angle with respect to the q-axis of a vector, in which d-axis estimated induced voltage residual ed indicating a residual of an induced voltage induced in the d-axis of motor 200 is a d-axis component and q-axis estimated induced voltage residual eq indicating a residual of an induced voltage induced in the q-axis of motor 200 is a q-axis component, based on d-axis current di and q-axis current qi calculated by current calculator 20, d-axis application voltage command dv_req (to be described later) and q-axis application voltage command qv_req (to be described later) calculated by voltage command calculator 50 (to be described later), and estimated rotation speed ω calculated by rotation speed estimation unit 30.

Here, the value of induced voltage residual angle θerror is specifically expressed by the following formula. [Mathematical Formula 1] $θerror = {tan}^{- 1} \left(\frac{- ed}{eq}\right)$

However, in the first period, the value of induced voltage residual angle θerror calculated by induced voltage calculator 31 is not necessarily a correct value, similarly to d-axis current di and q-axis current qi.

First switching unit 32 is configured to switch the value between zero and induced voltage residual angle θerror, calculated by induced voltage calculator 31, and output it in each of the first period and the second period other than the first period.

Here, "zero" refers to a dummy value that does not substantially affect the control of motor 200.

As described above, motor 200 is a brushless motor that rotates at a constant speed for a long period of time, and is a brushless motor that accelerates and decelerates slowly. Therefore, the value of induced voltage residual angle θerror in motor 200 always remains near zero.

For this reason, even when the value of induced voltage residual angle θerror that is not necessarily a correct value in the first period is changed to zero only in the first period, it does not substantially affect the control of motor 200.

First proportional integral computing unit 33 is configured to perform proportional integral computation using a signal output from first switching unit 32 as an input signal, and calculate estimated rotation speed ω of motor 200 and estimated rotation position θ of motor 200.

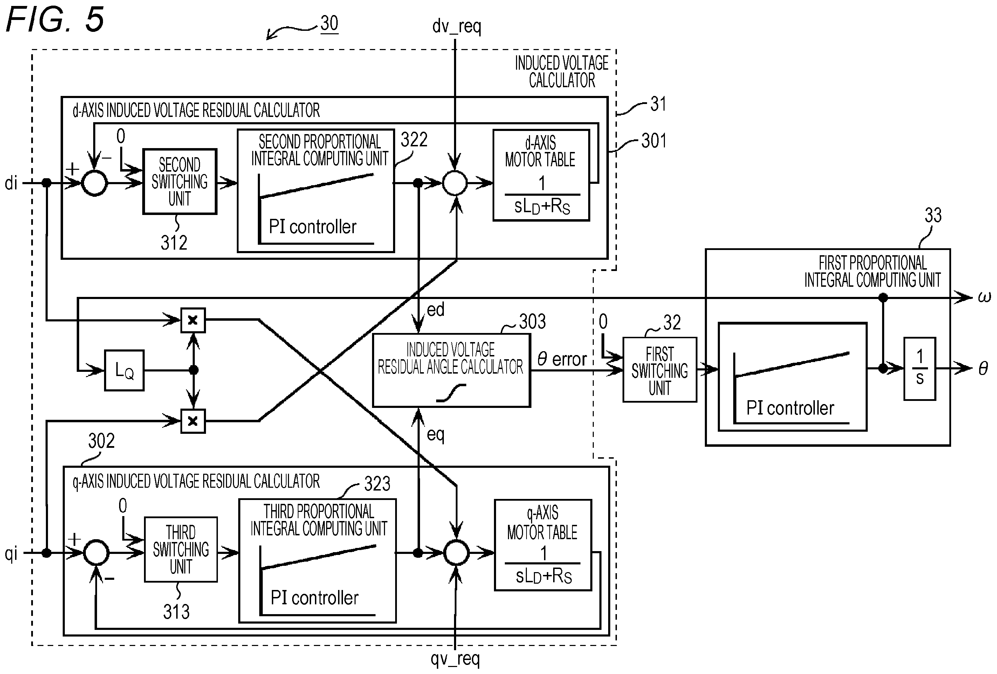

Fig. 5 is a block diagram illustrating a configuration of rotation speed estimation unit 30 according to the exemplary embodiment.

As illustrated in Fig. 5, induced voltage calculator 31 includes: d-axis induced voltage residual calculator 301; q-axis induced voltage residual calculator 302; and induced voltage residual angle calculator 303.

d-axis induced voltage residual calculator 301 is configured to calculate d-axis estimated induced voltage residual ed based on d-axis current di and q-axis current qi calculated by current calculator 20, d-axis application voltage command dv_req (to be described later) calculated by voltage command calculator 50 (to be described later), and estimated rotation speed ω calculated by rotation speed estimation unit 30.

q-axis induced voltage residual calculator 302 is configured to calculate q-axis estimated induced voltage residual eq based on d-axis current di and q-axis current qi calculated by current calculator 20, q-axis application voltage command qv_req (to be described later) calculated by voltage command calculator 50 (to be described later), and estimated rotation speed ω calculated by rotation speed estimation unit 30.

Induced voltage residual angle calculator 303 is configured to calculate induced voltage residual angle θerror based on d-axis estimated induced voltage residual ed calculated by d-axis induced voltage residual calculator 301 and q-axis estimated induced voltage residual eq calculated by q-axis induced voltage residual calculator 302.

As illustrated in Fig. 5, d-axis induced voltage residual calculator 301 includes second switching unit 312 and second proportional integral computing unit 322.

Second switching unit 312 is configured to switch the value between zero and a d-axis estimated current residual, indicating the residual of d-axis current di, and output it in each of the first period and the second period other than the first period.

Here, "zero" refers to a dummy value that does not substantially affect the control of motor 200.

As described above, motor 200 is a brushless motor that rotates at a constant speed for a long period of time, and is a brushless motor that accelerates and decelerates slowly. Therefore, the d-axis estimated current residual in motor 200 always remains near zero.

For this reason, even when the value of the d-axis estimated current residual that is not necessarily a correct value in the first period is changed to zero only in the first period, it does not substantially affect the control of motor 200.

Second proportional integral computing unit 322 is configured to perform proportional integral computation using a signal output from second switching unit 312 as an input signal, and calculate d-axis estimated induced voltage residual ed.

As illustrated in Fig. 5, q-axis induced voltage residual calculator 302 includes third switching unit 313 and third proportional integral computing unit 323.

Third switching unit 313 is configured to switch the value between zero and a q-axis estimated current residual, indicating the residual of q-axis current qi, and output it in each of the first period and the second period other than the first period.

Here, "zero" refers to a dummy value that does not substantially affect the control of motor 200.

As described above, motor 200 is a brushless motor that rotates at a constant speed for a long period of time, and is a brushless motor that accelerates and decelerates slowly. Therefore, the q-axis estimated current residual in motor 200 always remains near zero.

For this reason, even when the value of the q-axis estimated current residual that is not necessarily a correct value in the first period is changed to zero only in the first period, it does not substantially affect the control of motor 200.

Third proportional integral computing unit 323 is configured to perform proportional integral computation using a signal output from third switching unit 313 as an input signal, and calculate q-axis estimated induced voltage residual eq.

Returning to Fig. 1 again, the description of motor control device 100 will be continued.

Target rotation speed calculator 40 is configured to acquire an operation command of motor 200 output from the external device and calculate target rotation speed ω* of motor 200 based on the acquired operation command.

As an example to which the operation command does not necessarily have to be limited, the operation command is a PWM signal whose cycle is fixed at 500 Hz and whose duty ratio indicates a target rotation speed.

As illustrated in Fig. 1, target rotation speed calculator 40 includes: PWM signal detector 41; duty ratio detector 42; and target rotation speed converter 43.

PWM signal detector 41 is configured to detect a PWM signal that is an operation command of motor 200 output from an external device, and acquire the detected PWM signal.

Duty ratio detector 42 is configured to detect the duty ratio of the PWM signal acquired by PWM signal detector 41.

Target rotation speed converter 43 is configured to calculate target rotation speed ω*, indicated by the operation command, based on the duty ratio detected by duty ratio detector 42.

For example, target rotation speed converter 43 may store a table indicating a correspondence relationship between the duty ratio and the target rotation speed, and calculate target rotation speed ω*, indicated by the operation command, based on the duty ratio detected by duty ratio detector 42 and the stored table.

Voltage command calculator 50 is configured to calculate a duty command based on a difference between target rotation speed ω* calculated by target rotation speed calculator 40 and estimated rotation speed ω calculated by rotation speed estimation unit 30.

As illustrated in Fig. 1, voltage command calculator 50 includes: speed PI controller 51; current PI controller 52; inverse d/q-axis converter 53; and duty ratio calculator 54.

Speed PI controller 51 is configured to calculate, based on the difference between target rotation speed ω* calculated by target rotation speed calculator 40 and estimated rotation speed ω calculated by rotation speed estimation unit 30, d-axis command current di_req and q-axis command current qi_req for performing proportional-integral control of the rotation speed of motor 200 so that the difference approaches zero. Speed PI controller 51 normally calculates q-axis command current qi_req as a fixed value.

Current PI control unit 52 is configured to calculate, based on d-axis command current di_req and q-axis command current qi_req calculated by speed PI controller 51 and d-axis current di and q-axis current qi converted by d/q-axis converter 22, d-axis application voltage command dv_req and q-axis application voltage command qv_req for performing proportional-integral control of the current flowing through motor 200 so that the difference between d-axis command current di_req and d-axis current di approaches zero and the difference between q-axis command current qi_req and q-axis current qi approaches zero.

Inverse d/q-axis converter 53 is configured to convert d-axis application voltage command dv_req and q-axis application voltage command qv_req into U-phase application voltage command Uv_req, V-phase application voltage command Vv_req, and W-phase application voltage command Wv_req based on d-axis application voltage command dv_req and q-axis application voltage command qv_req calculated by current PI controller 52 and estimated rotation position θ calculated by rotation speed estimation unit 30.

Duty ratio calculator 54 is configured to convert U-phase application voltage command Uv_req, V-phase application voltage command Vv_req, and W-phase application voltage command Wv_req converted by inverse d/q-axis converter 53 into a duty ratio, calculate a duty command in a PWM format, and output the calculated duty command in a PWM signal format to inverter circuit 10.

### <Consideration>

When calculating estimated rotation speed ω of motor 200, motor control device 100 having the above configuration calculates estimated rotation speed ω of motor 200 while switching the value between zero and induced voltage residual angle θerror in the first period in which the DC bus current value detected by current sensor 500 is not necessarily a correct value, that is, in the first period in which the calculated value of induced voltage residual angle θerror is not necessarily a correct value and the second period other than the first period.

Meanwhile, as described previously, motor 200 is a brushless motor that rotates at a constant speed for a long period of time, and is a brushless motor that accelerates and decelerates slowly. Therefore, the value of induced voltage residual angle θerror in motor 200 always remains near zero.

For this reason, even when the value of induced voltage residual angle θerror that is not necessarily a correct value in the first period is changed to zero only in the first period, it does not substantially affect the control of motor 200.

In this manner, according to motor control device 100 having the above configuration, the motor control device adopting the one-shunt current detection method and capable of controlling the motor even when the first period exists is implemented.

Unlike the motor control device described in PTL 1, motor control device 100 having the above configuration does not calculate the current value of each phase of the three-phase AC in the first period based on the DC bus current detected immediately before the first period.

For this reason, in motor control device 100 having the above configuration, the amount of calculation in the calculation of the current value of each phase of the three-phase AC in the first period does not increase relative to the amount of calculation in other periods.

Therefore, motor control device 100 having the above configuration can be implemented using an inexpensive microcomputer with low processing capability without using an expensive microcomputer with high processing capability required in the motor control device described in PTL 1.

According to motor control device 100 having the above configuration, the amount of calculation in the calculation of the current value of each phase of the three-phase AC in the first period does not increase relative to the amount of calculation in other periods. Therefore, the power consumption in the control of motor 200 is suppressed as compared with the motor control device described in PTL 1.

Unlike the motor control device described in PTL 2, motor control device 100 having the above configuration does not intentionally distort the voltage waveform of each phase of the three-phase AC voltage supplied to motor 200 from an ideal sine wave.

For this reason, according to motor control device 100 having the above configuration, the rotation sound of motor 200 caused by intentionally distorting the voltage waveform of each phase of the three-phase AC voltage supplied to motor 200 from an ideal sine wave is not generated.

As described above, motor control device 100 according to the present exemplary embodiment includes: inverter circuit 10 that outputs a three-phase AC voltage to motor 200 by switching a power supply voltage of DC power supply 300; current calculator 20 that calculates a d-axis current flowing through a d-axis of motor 200 and a q-axis current flowing through a q-axis of the motor based on a current flowing between DC power supply 300 and inverter circuit 10; rotation speed estimation unit 30 that calculates an estimated rotation speed of motor 200 based on the d-axis current and the q-axis current; target rotation speed calculator 40 that calculates a target rotation speed of motor 200 based on an operation command of motor 200; and voltage command calculator 50 that calculates a duty command for controlling the switching performed by inverter circuit 10 based on a difference between the target rotation speed and the estimated rotation speed. Rotation speed estimation unit 30 includes: induced voltage calculator 31 that calculates an induced voltage residual angle indicating an angle with respect to the q-axis of a vector, in which a d-axis estimated induced voltage residual indicating a residual of an induced voltage induced in the d-axis of motor 200 is a d-axis component and a q-axis estimated induced voltage residual indicating a residual of an induced voltage induced in the q-axis of motor 200 is a q-axis component, based on the d-axis current and the q-axis current; first switching unit 32 that switches a value between zero and the induced voltage residual angle and outputs the value in each of a first period in which the three-phase AC voltage is within a predetermined phase range and a second period other than the first period; and first proportional integral computing unit 33 that performs proportional integral computation using a signal output from first switching unit 32 as an input signal and calculates the estimated rotation speed.

Thereby, motor control device 100 adopting a one-shunt current detection method can control the motor even when the specific phase period exists.

Meanwhile, induced voltage calculator 31 preferably includes: d-axis induced voltage residual calculator 301 that calculates the d-axis estimated induced voltage residual based on the d-axis current and the q-axis current; q-axis induced voltage residual calculator 302 that calculates the q-axis estimated induced voltage residual based on the d-axis current and the q-axis current; and induced voltage residual angle calculator 303 that calculates the induced voltage residual angle based on the d-axis estimated induced voltage residual and the q-axis estimated induced voltage residual, d-axis induced voltage residual calculator 301 preferably includes: second switching unit 312 that switches a value between zero and a d-axis estimated current residual, indicating a residual of the d-axis current, and outputs the value in each of the first period and the second period; and second proportional integral computing unit 322 that performs proportional integral computation using a signal output from the second switching unit as an input signal and calculates the d-axis estimated induced voltage residual, and q-axis induced voltage residual calculator 302 preferably includes: third switching unit 313 that switches a value between zero and a q-axis estimated current residual, indicating a residual of the q-axis current, and outputs the value in each of the first period and the second period; and third proportional integral computing unit 323 that performs proportional integral computation using a signal output from third switching unit 313 as an input signal and calculates the q-axis estimated induced voltage residual.

Meanwhile, the predetermined phase is preferably a phase in which a voltage difference between any two phases of the three-phase AC voltage is less than or equal to a predetermined value.

### (Supplementary)

As described above, the technology disclosed in the present application has been described based on the exemplary embodiment. However, the present disclosure is not limited to this exemplary embodiment. The present disclosure may incorporate, in one or multiple aspects range of the present disclosure, exemplary embodiments obtained by applying various modifications conceived by persons skilled in the art and exemplary embodiments obtained by combining constituent elements in different exemplary embodiments or modifications, unless deviating the object of the present disclosure. The scope of protection is defined in the appended claims.

### INDUSTRIAL APPLICABILITY

The present disclosure is widely applicable to a motor control device that controls a motor.

### REFERENCE MARKS IN THE DRAWINGS

1: motor control system
10: inverter circuit
20: current calculator
21: three-phase current calculator
22: d/q-axis converter
30: rotation speed estimation unit
31: induced voltage calculator
32: first switching unit
33: first proportional integral computing unit
40: target rotation speed calculator
41: PWM signal detector
42: duty ratio detector
43: target rotation speed converter
50: voltage command calculator
51: speed PI controller
52: current PI controller
53: inverse d/q-axis converter
54: duty ratio calculator
100: motor control device
200: motor
210: blower fan
300: DC power supply
301: d-axis induced voltage residual calculator
302: q-axis induced voltage residual calculator
303: induced voltage residual angle calculator
312: second switching unit
313: third switching unit
322: second proportional integral computing unit
323: third proportional integral computing unit
400: shunt resistor
500: current sensor

## Claims

1. A motor control device (100) comprising:
an inverter circuit (10) configured to output a three-phase AC voltage to a motor (200) by switching a power supply voltage of a DC power supply (300);
a current calculator (20) configured to calculate a d-axis current flowing through a d-axis of the motor and a q-axis current flowing through a q-axis of the motor based on a current flowing between the DC power supply (300) and the inverter circuit (10);
a rotation speed estimation unit (30) configured to calculate an estimated rotation speed of the motor based on the d-axis current and the q-axis current;
a target rotation speed calculator (40) configured to calculate a target rotation speed of the motor based on an operation command of the motor; and
a voltage command calculator (50) configured to calculate a duty command for controlling the switching performed by the inverter circuit based on a difference between the target rotation speed and the estimated rotation speed, wherein
the rotation speed estimation unit (30) includes:
an induced voltage calculator (31) configured to calculate an induced voltage residual angle indicating an angle with respect to the q-axis of a vector, in which a d-axis estimated induced voltage residual indicating a residual of an induced voltage induced in the d-axis of the motor is a d-axis component and a q-axis estimated induced voltage residual indicating a residual of an induced voltage induced in the q-axis of the motor is a q-axis component, based on the d-axis current and the q-axis
**characterised in that** the rotation speed estimation unit (30) further includes:
a first switching unit (32) configured to switch a value between zero and the induced voltage residual angle and output the value in each of a first period in which the three-phase AC voltage is within a predetermined phase range and a second period other than the first period; and
a first proportional integral computing unit (33) configured to perform proportional integral computation using a signal output from the first switching unit (32) as an input signal and calculate the estimated rotation speed.

2. The motor control device according to Claim 1, wherein
the induced voltage calculator (31) includes:
a d-axis induced voltage residual calculator (301) configured to calculate the d-axis estimated induced voltage residual based on the d-axis current and the q-axis current;
a q-axis induced voltage residual calculator (302) configured to calculate the q-axis estimated induced voltage residual based on the d-axis current and the q-axis current; and
an induced voltage residual angle calculator (303) configured to calculate the induced voltage residual angle based on the d-axis estimated induced voltage residual and the q-axis estimated induced voltage residual,
the d-axis induced voltage residual calculator (301) includes:
a second switching unit (312) configured to switch a value between zero and a d-axis estimated current residual, indicating a residual of the d-axis current, and output the value in each of the first period and the second period; and
a second proportional integral computing unit (322) configured to perform a proportional integral computation using a signal output from the second switching unit (312) as an input signal and calculates the d-axis estimated induced voltage residual, and
the q-axis induced voltage residual calculator (302) includes:
a third switching unit (313) configured to switch a value between zero and a q-axis estimated current residual, indicating a residual of the q-axis current, and output the value in each of the first period and the second period; and
a third proportional integral computing unit (323) configured to perform proportional integral computation using a signal output from the third switching unit (313) as an input signal and calculate the q-axis estimated induced voltage residual.

3. The motor control device according to any one of Claims 1 and 2, wherein the predetermined phase is a phase in which a voltage difference between any two phases of the three-phase AC voltage is less than or equal to a predetermined value.

## Patentansprüche

1. Eine Motorsteuervorrichtung (100), umfassend:
eine Wechselrichterschaltung (10), die dazu eingerichtet ist, eine dreiphasige Wechselspannung an einen Motor (200) durch Schalten einer Versorgungsspannung einer Gleichstromversorgung (300) auszugeben;
einen Stromberechner (20), der dazu eingerichtet ist, einen durch die d-Achse des Motors fließenden d-Achsen-Strom und einen durch die q-Achse des Motors fließenden q-Achsen-Strom auf der Grundlage eines zwischen der Gleichstromversorgung (300) und der Wechselrichterschaltung (10) fließenden Stroms zu berechnen;
eine Drehzahlschätzeinheit (30), die dazu eingerichtet ist, eine geschätzte Drehzahl des Motors auf der Grundlage des d-Achsen-Stroms und des q-Achsen-Stroms zu berechnen;
einen Soll-Drehzahl-Rechner (40), der dazu eingerichtet ist, eine Soll-Drehzahl des Motors auf der Grundlage eines Betriebsbefehls für den Motor zu berechnen; und
einen Spannungsbefehls-Rechner (50), der dazu eingerichtet ist, einen Tastgrad-Befehl zur Steuerung der von der Wechselrichterschaltung durchgeführten Schaltvorgänge auf der Grundlage einer Differenz zwischen der Soll-Drehzahl und der geschätzten Drehzahl zu berechnen, wobei
die Drehzahlschätzeinheit (30) umfasst:
einen Induktionsspannungs-Berechner (31), der dazu eingerichtet ist, einen Induktionsspannungs-Restwinkel zu berechnen, der einen Winkel in Bezug auf die q-Achse eines Vektors angibt, wobei ein geschätzter Induktionsspannungs-Restwert der d-Achse, der einen Restwert einer in der d-Achse des Motors induzierten Induktionsspannung angibt, eine d-Achsen-Komponente ist und ein geschätzter Induktionsspannungs-Restwert der q-Achse, der einen Restwert einer in der q-Achse des Motors induzierten Induktionsspannung angibt, eine q-Achsen-Komponente ist, basierend auf dem d -Achsen-Strom und den q-Achsen-Strom;
**dadurch gekennzeichnet, dass** die Drehzahlschätzeinheit (30) ferner umfasst:
eine erste Schalteinheit (32), die dazu eingerichtet ist, einen Wert zwischen Null und dem Induktionsspannungs-Restwinkel umzuschalten und den Wert jeweils in einer ersten Periode, in der die dreiphasige Wechselspannung innerhalb eines vorbestimmten Phasenbereichs liegt, und in einer zweiten Periode, die sich von der ersten Periode unterscheidet, auszugeben; und
eine erste Proportional-Integral-Recheneinheit (33), die dazu eingerichtet ist, eine Proportional-Integral-Berechnung unter Verwendung eines von der ersten Schalteinheit (32) ausgegebenen Signals als Eingangssignal durchzuführen und die geschätzte Drehzahl zu berechnen.

2. Die Motorsteuervorrichtung nach Anspruch 1, wobei
der Induktionsspannungs-Berechner (31) umfasst:
einen d-Achsen-Induktionsspannungsrestrechner (301), der dazu eingerichtet ist, den geschätzten Induktionsspannungsrest der d-Achse auf der Grundlage des d-Achsen-Stroms und des q-Achsen-Stroms zu berechnen;
einen q-Achsen-Induktionsspannungsrestrechner (302), der dazu eingerichtet ist, den geschätzten Induktionsspannungsrest der q-Achse auf der Grundlage des d-Achsen-Stroms und des q-Achsen-Stroms zu berechnen; und
einen Induktionsspannungs-Restwinkel-Rechner (303), der dazu eingerichtet ist, den Induktionsspannungs-Restwinkel auf der Grundlage des geschätzten Restwerts der Induktionsspannung der d-Achse und des geschätzten Restwerts der Induktionsspannung der q-Achse zu berechnen,
wobei der Rechner (301) für den Restwert der Induktionsspannung der d-Achse umfasst:
eine zweite Schalteinheit (312), die dazu eingerichtet ist, einen Wert zwischen Null und einem geschätzten d-Achsen-Stromrest, der einen Rest des d-Achsen-Stroms angibt, umzuschalten und den Wert jeweils in der ersten Periode und der zweiten Periode auszugeben; und
eine zweite Proportional-Integral-Recheneinheit (322), die dazu eingerichtet ist, eine Proportional-Integral-Berechnung unter Verwendung eines von der zweiten Schalteinheit (312) ausgegebenen Signals als Eingangssignal durchzuführen und den geschätzten Restwert der Induktionsspannung der d-Achse zu berechnen, und
der Rechner (302) für den Restwert der Induktionsspannung der q-Achse umfasst:
eine dritte Schalteinheit (313), die dazu eingerichtet ist, einen Wert zwischen Null und einem geschätzten Stromrestwert der q-Achse, der einen Restwert des Stroms der q-Achse angibt, umzuschalten und den Wert jeweils in der ersten Periode und der zweiten Periode auszugeben; und
eine dritte Proportional-Integral-Recheneinheit (323), die dazu eingerichtet ist, unter Verwendung eines von der dritten Schalteinheit ausgegebenen Signals als Eingangssignal eine Proportional-Integral-Berechnung durchzuführen und den geschätzten Induktionsspannungs-Restwert der q-Achse zu berechnen.

3. Die Motorsteuervorrichtung nach einem der Ansprüche 1 und 2, wobei die vorbestimmte Phase eine Phase ist, in der eine Spannungsdifferenz zwischen zwei beliebigen Phasen der dreiphasigen Wechselspannung kleiner oder gleich einem vorbestimmten Wert ist.

## Revendications

1. Dispositif de commande de moteur (100) comprenant :
un circuit onduleur (10) conçu pour délivrer une tension CA triphasée auprès d'un moteur (200) en effectuant des commutations sur une tension d'alimentation provenant d'une source d'alimentation CC (300),
un calculateur de courant (20) conçu pour calculer un courant d'axe d traversant un axe d du moteur et un courant d'axe q traversant un axe q du moteur, en fonction du courant circulant entre la source d'alimentation CC (300) et le circuit onduleur (10),
une unité d'estimation de vitesse de rotation (30) conçue pour calculer une vitesse de rotation estimée du moteur en fonction du courant d'axe d et du courant d'axe q,
un calculateur de vitesse de rotation cible (40) conçu pour calculer une vitesse de rotation cible du moteur en fonction d'une commande de fonctionnement du moteur, et
un calculateur de commande de tension (50) conçu pour calculer une commande de rapport cyclique pour commander la commutation réalisée par le circuit onduleur en fonction d'une différence entre la vitesse de rotation cible et la vitesse de rotation estimée ;
ladite unité d'estimation de vitesse de rotation (30) comprenant :
un calculateur de tension induite (31) conçu pour calculer un angle résiduel de tension induite indiquant un angle par rapport à l'axe q d'un vecteur, dans lequel un résidu estimé de tension induite sur l'axe d, indiquant un résidu d'une tension induite sur l'axe d du moteur, est une composante d'axe d, et un résidu estimé de tension induite sur l'axe q, indiquant un résidu d'une tension induite sur l'axe q du moteur, est une composante d'axe q, en fonction du courant d'axe d et du courant d'axe q ;
**caractérisé en ce que** l'unité d'estimation de vitesse de rotation (30) comprend en outre :
une première unité de commutation (32) conçue pour effectuer une commutation sur une valeur entre zéro et l'angle résiduel de tension induite et pour délivrer la valeur dans une première période au cours de laquelle la tension CA triphasée se situe dans une plage de phase prédéterminée ainsi que dans une deuxième période autre que la première période, et
une première unité de calcul proportionnel-intégral (33) conçue pour réaliser un calcul proportionnel-intégral au moyen d'un signal émis par la première unité de commutation (32) en tant que signal d'entrée, et pour calculer la vitesse de rotation estimée.

2. Dispositif de commande de moteur selon la revendication 1, dans lequel
le calculateur de tension induite (31) comprend :
un calculateur de tension résiduelle induite sur l'axe d (301) conçu pour calculer la tension résiduelle induite estimée sur l'axe d en fonction du courant d'axe d et du courant d'axe q,
un calculateur de tension résiduelle induite sur l'axe q (302) conçu pour calculer la tension résiduelle induite estimée sur l'axe q en fonction du courant d'axe d et du courant d'axe q, et
un calculateur d'angle de résidu de tension induite (303) conçu pour calculer l'angle de résidu de tension induite en fonction du résidu de tension induite estimé sur l'axe d et du résidu de tension induite estimé sur l'axe q ;
le calculateur de résidu de tension induite sur l'axe d (301) comprend :
une deuxième unité de commutation (312) conçue pour effectuer une commutation sur une valeur entre zéro et un résidu de courant estimé sur l'axe d, indiquant un résidu du courant d'axe d, et pour délivrer la valeur dans chacune des première et deuxième périodes, et
une deuxième unité de calcul proportionnel-intégral (322) conçue pour réaliser un calcul proportionnel-intégral au moyen d'un signal émis par la deuxième unité de commutation (312) en tant que signal d'entrée, et pour calculer la tension résiduelle induite estimée sur l'axe d ; et
le calculateur de résidu de tension induite sur l'axe q (302) comprend :
une troisième unité de commutation (313) conçue pour effectuer une commutation sur une valeur entre zéro et un résidu de courant estimé sur l'axe q, indiquant un résidu du courant d'axe q, et pour délivrer la valeur dans chacune des première et deuxième périodes, et
une troisième unité de calcul proportionnel-intégral (323) conçue pour réaliser un calcul proportionnel-intégral au moyen d'un signal émis par la troisième unité de commutation (313) en tant que signal d'entrée, et pour calculer la tension résiduelle induite estimée sur l'axe q.

3. Dispositif de commande de moteur selon l'une quelconque des revendications 1 et 2,
dans lequel la phase prédéterminée est une phase dans laquelle une différence de tension entre deux phases quelconques de la tension CA triphasée est inférieure ou égale à une valeur prédéterminée.
